# FASCICULE DE BREVET EUROPEEN

(11) **EP 3 394 405 B1**
(45) Date de publication et mention de la délivrance du brevet: **20.11.2019**
(21) Numéro de dépôt: 16826724.3
(22) Date de dépôt: 21.12.2016
(51) Int. Cl.: F01N 3/20, F01N 13/18

(54) **RÉSERVOIR DE STOCKAGE D'UN PRÉCURSEUR D'AMMONIAC**
TANK ZUR LAGERUNG EINES AMMONIAKVORLÄUFERS
TANK FOR STORING AN AMMONIA PRECURSOR

(30) Priorité: 23.12.2015 FR 1563193
(43) Date de publication de la demande: 31.10.2018
(73) Titulaire: Plastic Omnium Advanced Innovation and Research, 1130 Bruxelles (BE)
(72) Inventeur: LAHRAICHI, Saïd, 27140 Gisors (FR); GUILLERME, Hervé, 60200 Compiègne (FR)
(74) Mandataire: LLR
(86) Numéro de dépôt international: PCT/EP2016/082070
(87) Numéro de publication internationale: WO 2017/108887

(56) Documents cités:
- DE-A1-102009 029 375
- DE-A1-102014 007 706
- US-A1- 2010 224 284

## Description

L'invention concerne les réservoirs d'additif liquide pour véhicule et plus particulièrement un réservoir d'un précurseur d'ammoniac.

Ces agents sont destinés à être injectés dans la ligne d'échappement d'un véhicule afin de réduire les émissions d'oxydes d'azote (typiquement appelés NOx) dans les gaz d'échappement. De tels agents sont utilisés dans un système dit « SCR » (correspondant à l'expression anglaise Selective Catalytic Réduction, qui signifie réduction catalytique sélective) permettant la réduction de la teneur en NOx dans les gaz d'échappement d'un moteur à combustion interne d'un véhicule.

On connait du document WO-2011/107315 un réservoir de stockage d'une solution aqueuse d'un précurseur d'ammoniac comprenant une tubulure de remplissage et un organe de ventilation traversant une paroi du réservoir et permettant le dégazage lors du remplissage du réservoir. Lors du remplissage du réservoir par la tubulure prévue à cet effet, une partie de l'air initialement présent dans le réservoir est évacuée par l'organe de ventilation. Une fois le réservoir plein, la solution d'additif remonte par la tubulure de remplissage jusqu'au niveau de moyens permettant la détection d'un niveau de remplissage maximal. Les documents DE 10 2009 029375 A1, DE 2014 007706 A1 et US 2010/224284 A1 décrivent également des réservoirs d'un précurseur d'ammoniac comprenant un organe de ventilation.

Un inconvénient de ce réservoir est que l'extrémité de l'organe de ventilation se trouvant à l'intérieur du réservoir peut être percutée par des blocs d'additif gelé. En effet, la solution d'urée, en général eutectique, gèle à - 11°C et se trouve dans certaines conditions partiellement voire totalement solidifiée à l'intérieur du réservoir. Il se pourrait alors que des blocs de solution solidifiée ou « glace » viennent heurter la ligne de ventilation ou pousser sur celle-ci et l'endommager. Dans le cas d'une congélation totale de l'additif, une trop forte pression exercée sur l'extrémité intérieure de la ligne de ventilation pourrait aussi conduire à son endommagement.

Un but de l'invention est de supprimer ou tout au moins de limiter notablement tout ou partie des inconvénients précités.

Dans ce but, l'invention a pour objet un réservoir de stockage d'un précurseur d'ammoniac pour véhicule comprenant un organe de ventilation traversant une paroi du réservoir et agencé de sorte qu'une forme de l'organe est modifiée sous l'effet d'une sollicitation interne au réservoir et ayant une intensité supérieure à un seuil prédéterminé et que la forme est restaurée lorsque la sollicitation disparait.

Ainsi, on permet à l'organe de ventilation d'amortir les chocs causés par une forte pression mécanique exercée par des blocs d'additif gelé ou les chocs causés par ces blocs. On réduit alors les risques de cassure de l'extrémité de l'organe de ventilation se trouvant à l'intérieur du réservoir. L'organe de ventilation se déploie à nouveau après avoir été sollicité afin de permettre de nouveau un amortissement des chocs. On entend par exemple par modification de forme la capacité de l'organe de ventilation à réduire sa longueur ou encore sa capacité à subir une torsion ou une flexion sous l'effet d'une telle sollicitation avec un retour à l'état initial après disparition de la sollicitation interne. Cette torsion ou cette flexion peut avoir lieu dans une ou plusieurs directions et/ou autour d'un ou de plusieurs axes. Par exemple, une extrémité de l'organe et/ou un siège de valve de l'organe se déplace et/ou change de position sous l'effet de cette modification de la forme.

On peut prévoir que l'organe de ventilation est agencé de sorte qu'une longueur de l'organe se réduit sous l'effet de la sollicitation interne au réservoir et ayant une intensité supérieure à un seuil prédéterminé et que la longueur augmente lorsque la sollicitation disparait.

On peut prévoir que l'organe de ventilation comprend un tronçon élastique.

Il s'agit d'un moyen simple pour permettre à l'organe de ventilation de retrouver sa forme initiale.

Avantageusement, les moyens d'amortissement des chocs comprennent un tronçon annelé.

Un tube annelé est une structure qui présente l'avantage d'apporter une souplesse notable à l'organe de ventilation. Il peut être fabriqué de manière simple et rapide, par moulage par exemple, et présente un faible coût de conception.

Alternativement, les moyens d'amortissement des chocs comprennent un tronçon télescopique.

Il s'agit d'un autre mode de réalisation des moyens d'amortissement des chocs.

Un autre inconvénient d'un réservoir selon l'art antérieur est que la ligne de ventilation occupe une place non négligeable au sein d'un réservoir qu'on veut le plus compact possible compte tenu du volume disponible dans le véhicule. Afin de remédier à cette problématique, la ligne de ventilation peut adopter une forme particulière autour de la tubulure de remplissage à laquelle elle est reliée et par exemple une forme sinueuse. Cependant, cela a pour inconvénient de créer des courbures non souhaitées dans la ligne de ventilation, ce qui peut conduire à une rétention de liquide à l'intérieur de cette dernière. En effet, lorsque le niveau de liquide dans le réservoir atteint le niveau maximal laissant un ciel d'air résiduel, un accroissement brutal de la pression provoque un rejet de liquide dans la ligne de ventilation (phénomène appelé « spitback » en anglais), du liquide restant piégé dans la ligne de ventilation. De plus, la tubulure de ventilation reste typiquement au moins partiellement remplie de solution d'additif après remplissage, ce qui peut dans certaines conditions conduire à des problèmes de gel.

Pour remédier à cela, on peut prévoir que le réservoir comprend une tubulure de remplissage et que l'organe de ventilation est agencé de manière à communiquer avec l'extérieur du réservoir indépendamment de la tubulure de remplissage.

Comme l'organe de ventilation communique directement avec l'extérieur du réservoir en étant disjoint et indépendant de la tubulure de remplissage, il devient possible de prévoir un positionnement ainsi que des dimensions de l'organe de ventilation de manière à minimiser son impact sur la taille du réservoir. On obtient donc un dispositif beaucoup plus compact et moins encombrant. De plus, une telle ligne de ventilation pallie les inconvénients en termes de rétention d'additif.

Avantageusement, la tubulure de remplissage ne comprend pas de ligne de ventilation propre.

Ainsi, on peut prévoir que l'organe de ventilation remplit à lui seul la fonction de dégazage lors du remplissage du réservoir, ou que cette fonction est remplie en partie par cet organe et par au moins un autre organe de ventilation indépendant lui aussi de la ligne de remplissage.

On peut prévoir que l'organe de ventilation est agencé pour obturer le réservoir lorsqu'un liquide atteint un niveau prédéterminé dans le réservoir.

L'organe de ventilation joue alors un rôle actif dans la fixation d'un niveau de remplissage maximal en ne permettant plus le remplissage du réservoir avec la solution quand il est plein. On évite aussi de la sorte l'expulsion et la rétention de liquide à l'intérieur des moyens de ventilation.

On peut prévoir que l'organe de ventilation comprend un clapet à flotteur.

Ainsi, le clapet est en position ouverte lorsque le réservoir est vide ou en cours de remplissage et en position fermée lorsqu'il est plein, cela entraînant une remontée de liquide dans la tubulure de remplissage et une détection du niveau de remplissage maximal par les moyens ad hoc. Il s'agit d'un système simple de conception et efficace dans un rôle d'organe de dégazage et de fixation d'un niveau de remplissage maximal du réservoir.

Selon un premier mode de réalisation, le flotteur comprend une bille.

Ainsi, on obtient un dispositif très simple de conception.

Selon un second mode de réalisation, le flotteur comprend une surface inférieure plane.

Ainsi, la surface de contact est plus étendue entre la base du flotteur et le liquide contenu à l'intérieur du réservoir. Le liquide exerce alors une poussée plus importante lors de la transition du clapet à flotteur entre sa position ouverte et sa position fermée.

On peut prévoir aussi que le flotteur comprend une partie supérieure de forme conique ou tronconique.

Ainsi, il est possible d'obtenir une surface de contact plus étendue entre la partie supérieure du flotteur et la face interne du clapet en position de fermeture. Ce dernier présente alors une meilleure étanchéité.

On peut prévoir que le réservoir soit particulièrement adapté au stockage d'une solution d'urée.

L'urée étant un composé corrosif lorsqu'il est dissout dans l'eau, le réservoir est avantageusement composé d'un ou plusieurs matériaux plastiques. Tous les types de matériaux aptes à stocker l'urée en solution peuvent convenir. Des matériaux plastiques convenant bien appartiennent à la catégorie des polymères thermoplastiques.

Par matériau thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquences, les copolymères à blocs et les copolymères greffés. Tout type de polymère ou de copolymère thermoplastique dont la température de fusion est inférieure à la température de décomposition convient. Les matériaux thermoplastiques de synthèse qui présentent une plage de température de fusion étalée sur au moins 10 degrés Celsius conviennent particulièrement bien. Comme exemple de tels matériaux, on trouve ceux qui présentent une poly-dispersion de leur masse moléculaire. En particulier, on peut utiliser des polyoléfines, des polyesters thermoplastiques, des poly-cétones, des polyamides et leurs copolymères. Un mélange de polymères ou de copolymères peut aussi être utilisé, de même qu'un mélange de matériaux polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères mentionnés précédemment.

Un polymère souvent employé est le polyéthylène. D'excellents résultats ont été obtenus avec du polyéthylène haute densité (PEHD).

Nous allons maintenant présenter trois modes de réalisation de l'invention donnés à titre d'exemples non limitatif, à l'appui des dessins annexés sur lesquels :
- la figure 1 est une vue en coupe verticale d'un réservoir de stockage selon un premier mode de réalisation de l'invention comprenant une tubulure de remplissage et un organe de ventilation indépendant de la tubulure de remplissage ;
- La figure 2 est une vue en coupe axiale d'une partie de l'organe de ventilation du réservoir de la figure 1 avec un clapet à flotteur, dans une première configuration ;
- La figure 3 est une vue analogue à la figure 2 montrant le clapet à flotteur dans une deuxième configuration ;
- Les figures 4 à 6 sont des vues analogues aux figures 2 et 3 montrant un deuxième mode de réalisation de l'invention avec son clapet à flotteur dans trois configurations respectives ; et
- La figure 7 est une vue analogue à la figure 2 montrant un troisième mode de réalisation de l'invention avec une colonne télescopique.

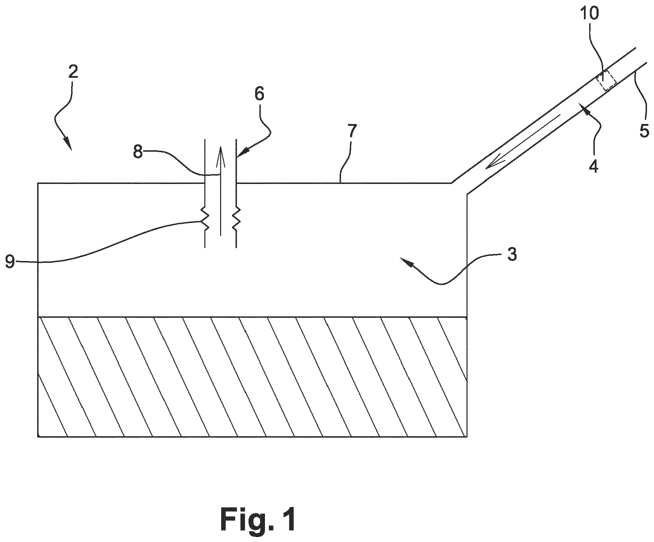

On se réfère maintenant à la figure 1 qui représente un réservoir de stockage d'une solution aqueuse 2 d'un précurseur d'ammoniac telle qu'une solution eutectique d'urée, comprenant un corps principal 3, une tubulure de remplissage 4 et un organe de ventilation 6. La tubulure de remplissage débouche par une extrémité inférieure interne aval dans le corps. L'organe de ventilation 6 débouche par une extrémité inférieure interne amont dans le corps. La tubulure de remplissage présente par ailleurs une extrémité supérieure externe amont 5 accessible par exemple depuis l'extérieur du véhicule pour introduire la solution de précurseur dans le réservoir. La tubulure et l'organe sont indépendants l'un de l'autre, disjoints et intégralement à distance l'un de l'autre. Il en est de même en particulier pour leurs extrémités contiguës au réservoir. L'organe de ventilation comprend sur sa portion s'étendant à l'intérieur du réservoir des moyens d'amortissement des chocs 9 aptes à lui permettre de modifier sa forme sous l'effet d'une sollicitation interne au réservoir et ayant une intensité supérieure à un seuil prédéterminé et tels que la forme est restaurée lorsque la sollicitation disparait.

L'organe de ventilation 6 forme un passage de communication gazeuse 8 directement entre l'intérieur et l'extérieur du réservoir 2.

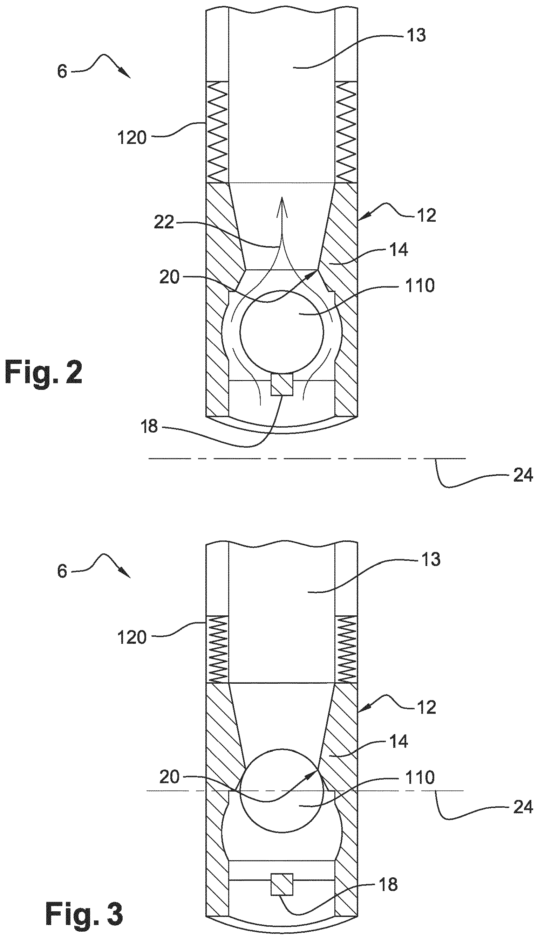

Dans ce premier mode de réalisation, l'organe de ventilation 6 comprend des moyens représentés aux figures 2 et 3. Ces figures représentent à titre d'exemple un clapet à flotteur. Dans ces figures, un clapet 12 comprend un conduit cylindrique vertical 13 à section circulaire dans un plan transversal à son axe longitudinal, ce conduit étant formé par une paroi 14 d'épaisseur variable. Le clapet comprend aussi une bille 110 montée mobile dans un logement du conduit. Ce clapet s'étend tout entier à un niveau inférieur à celui de la paroi supérieure 7 du réservoir, dans ce dernier.

Au-dessous de la bille, le logement est délimité par un socle 18 s'étendant dans la partie basse du clapet à flotteur où la largeur du conduit 13 est la plus importante. Ce socle est par exemple formé par une barrette allongée horizontale s'étendant dans une direction perpendiculaire au plan de la figure. Ce socle empêche la chute de la bille dans le réservoir. Le clapet est dimensionné de sorte que, lorsque la bille repose sur le socle, un passage annulaire est ménagé entre la bille et la paroi, autour de la bille, pour l'air du réservoir. Le clapet est alors en position ouverte comme sur la figure 2.

En partie supérieure, le logement de la bille est délimité par un étranglement 20 de la paroi qui limite la remontée de la bille dans le conduit et forme un siège pour la bille en position fermée du clapet, la bille obturant alors le clapet comme illustré à la figure 3. Un contact annulaire surfacique se produit alors entre la bille et la paroi, engendrant une fermeture étanche du clapet qui interdit la remontée de liquide ou de gaz dans l'organe de ventilation. Le clapet forme ainsi des moyens de détection 110 d'un niveau de remplissage maximal.

L'organe de ventilation comprend également un tronçon prédéterminé formant des moyens d'amortissement des chocs 120, le tronçon étant situé entre le clapet à flotteur 12 et la face interne de la paroi supérieure 7 du réservoir, moyens représentés ici schématiquement par un système de ressorts et formés matériellement par un tronçon annelé du tube cylindrique. Une telle forme annelée permet une déformation essentiellement élastique du tronçon en compression suivant son axe longitudinal vertical lorsqu'une sollicitation de compression qui dépasse un seuil prédéterminé est exercée.

On obtient alors un système complet d'alimentation et de stockage d'additif, et de ventilation de gaz.

Le clapet 12 permet de limiter le remplissage du réservoir 2 lorsqu'un niveau de solution d'additif maximal est atteint. En d'autres termes, il permet à l'organe de ventilation 6, via une interaction avec le liquide présent dans le réservoir et représenté par son niveau 24, de stopper la sortie de gaz et donc le remplissage du réservoir.

Dans la configuration selon la figure 2, correspondant au réservoir vide ou en cours de remplissage, la bille 110, située à distance du niveau du liquide qui est plus bas, repose sur le socle 18 et laisse passer un flux d'air 22 tout autour d'elle à l'intérieur du clapet 12 qui est ouvert. Les moyens d'amortissement des chocs 120 sont alors en position relâchée puisque non sollicités par la solution d'additif.

Lors de la phase finale de remplissage du réservoir, représentée à la figure 3, la solution d'additif arrive à hauteur du clapet à flotteur 12. La bille 110, agencée pour flotter dans le liquide, est alors poussée par l'additif liquide (représenté par son niveau 24) jusqu'à atteindre le niveau de la paroi 14 du réservoir où le diamètre du conduit est inférieur au diamètre de la bille 110. La bille présente une densité suffisante (par référence à la solution) pour ne pas être soulevée par l'air lors du dégazage mais seulement par la solution d'additif lors de la phase terminale de remplissage. On peut prévoir que les moyens d'amortissement des chocs 210 soient alors comprimés du fait de la poussée de la bille 110 sur la paroi 14. La bille obture donc le clapet.

L'air ne peut donc plus circuler entre la bille et la paroi interne du clapet. Le clapet étant étanche dans cette configuration, on évite également l'expulsion de liquide à l'extérieur du réservoir. L'additif liquide remonte alors dans la tubulure 4 de remplissage jusqu'aux moyens 10 de détection d'un niveau de remplissage maximal. Cela a pour avantage de fixer un niveau maximal de remplissage du réservoir.

Une baisse importante des températures peut conduire à une solidification totale ou partielle du précurseur d'ammoniac. L'additif solidifié exerce alors une pression mécanique plus importante que celle exercée par la solution liquide comme vu à la figure 3. Les moyens 9 d'amortissement des chocs absorbent cette pression en déformant l'organe 9 qui se rétracte pour prévenir une éventuelle cassure de l'extrémité intérieure de l'organe de ventilation. Ils assurent également une protection du clapet contre des chocs avec des blocs de solution gelée flottant dans la solution liquide.

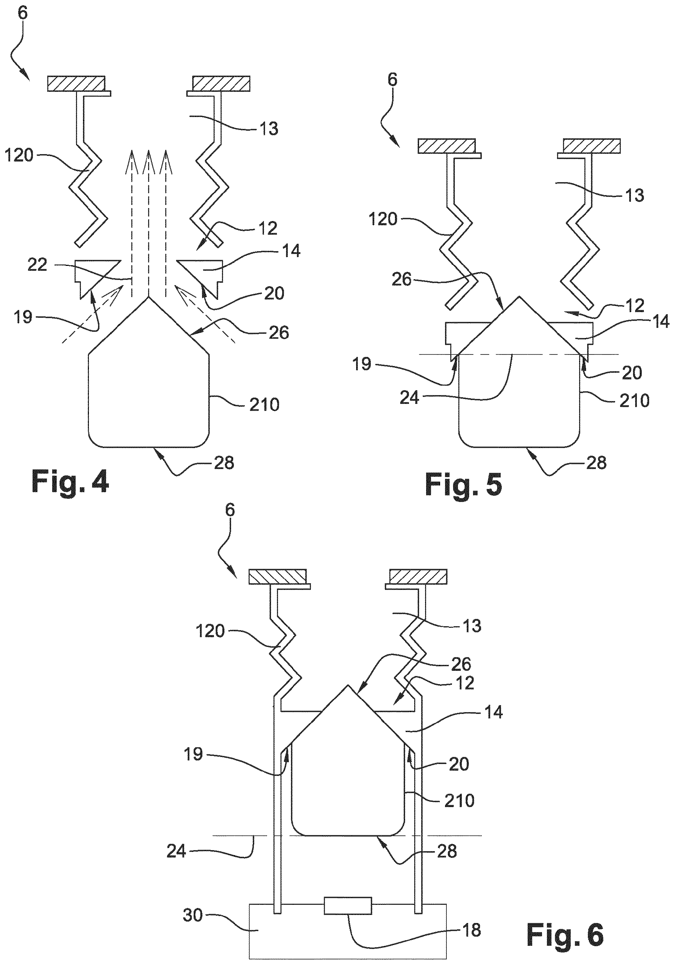

Les figures 4 à 6 représentent quant à elles, avec des références augmentées de 100 pour le flotteur et les moyens d'amortissement des chocs, les moyens des figures 2 et 3 selon un second mode de réalisation. Seules les différences entre ce mode de réalisation et le précédent vont être présentées. Le flotteur 210 présente cette fois une face inférieure plane 28 ainsi qu'une face supérieure conique 26. La face interne 19 de la paroi du clapet à flotteur au niveau de l'étranglement 20 présente une forme tronconique complémentaire, notamment de même angle, à celle de la face supérieure 26 du flotteur. Le flotteur adopte donc une forme lui permettant d'optimiser non seulement son interaction avec le liquide mais aussi avec la face interne du clapet.

Les moyens d'amortissement des chocs 120 sont encore formés ici par un tube annelé qui forme un tronçon cylindrique de la paroi du clapet, au-dessus de l'étranglement.

Lors de la phase finale de remplissage représentée sur la figure 5, la solution de précurseur d'ammoniac 24 pousse le flotteur 210 le long du conduit 13 jusqu'à le plaquer contre la face interne 19 du clapet 12. Cette poussée est alors améliorée grâce à la face inférieure plane du flotteur. La partie supérieure 26 du flotteur 210 présente une complémentarité de forme avec la paroi intérieure du clapet. Cela a pour conséquence d'augmenter la surface de contact entre ces deux parties et donc l'étanchéité du dispositif.

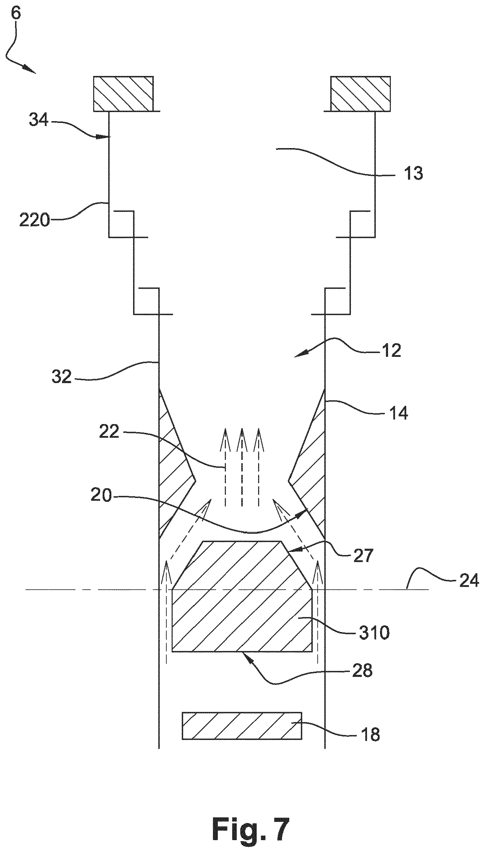

La figure 7 représente, avec des références augmentées de 100 pour le flotteur et les moyens d'amortissement des chocs, un clapet à flotteur selon un troisième mode de réalisation, avec des moyens d'amortissement des chocs 220 comprenant une colonne télescopique. Il s'agit d'un ensemble de tubes concentriques enfilés les uns dans les autres de façon étanche et de diamètres respectifs diminuant du tube extérieur au tube intérieur de l'assemblage. Cet ensemble a une longueur variable grâce au coulissement de chaque tube par rapport à son ou ses voisins.

Le flotteur 310 présente une face supérieure tronconique 27 et une face inférieure plane 28.

En cas de gel ou de choc avec un bloc d'additif gelé, l'extrémité basse 32 de la colonne télescopique, si elle est soumise à une sollicitation axiale vers le haut ayant une intensité qui dépasse un seuil prédéterminé, se rétracte sous l'effet du choc en direction de son extrémité haute fixe 34 en contact sur la face interne de la paroi 7 du réservoir. Ensuite, une fois le choc passé, elle se déploie à nouveau vers le bas sous l'effet de la gravité.

Dans cette variante, la pression exercée par l'additif, qu'il soit liquide ou bien solide, est absorbée par la colonne.

Bien entendu, on pourra apporter à l'invention de nombreuses modifications sans sortir du cadre de celle-ci.

On peut notamment envisager que le flotteur présente un forme différente de celles présentées dans les trois modes de réalisation.

De la même manière, les moyens d'amortissement des chocs pourront adopter une forme différente des modes de réalisation présentés ci-dessus.

Les moyens d'amortissement pourraient s'étendre sur toute la hauteur de l'organe de ventilation.

## Revendications

1. Réservoir (2) de stockage d'un précurseur d'ammoniac pour véhicule comprenant un organe de ventilation (6) traversant une paroi du réservoir, **caractérisé en ce que** l'organe de ventilation comprend sur une portion à l'intérieur du réservoir des moyens d'amortissement des chocs (9) aptes à permettre de modifier une forme de l'organe sous l'effet d'une sollicitation interne au réservoir et ayant une intensité supérieure à un seuil prédéterminé et de restaurer la forme lorsque la sollicitation disparait.

2. Réservoir (2) selon la revendication 1, dans lequel l'organe de ventilation est agencé de sorte qu'une longueur de l'organe se réduit sous l'effet de la sollicitation interne au réservoir et ayant une intensité supérieure à un seuil prédéterminé et que la longueur augmente lorsque la sollicitation disparait.

3. Réservoir (2) selon l'une quelconque des revendications précédentes, dans lequel l'organe de ventilation (6) comprend un tronçon élastique.

4. Réservoir (2) selon l'une quelconque des revendications précédentes, dans lequel l'organe de ventilation (6) comprend un tronçon annelé (120).

5. Réservoir (2) selon l'une quelconque des revendications précédentes, dans lequel l'organe de ventilation comprend un tronçon télescopique (220).

6. Réservoir (2) selon l'une quelconque des revendications précédentes, dans lequel le réservoir comprend une tubulure de remplissage (4) et l'organe de ventilation (6) est agencé de manière à communiquer avec l'extérieur du réservoir indépendamment de la tubulure de remplissage.

7. Réservoir (2) selon la revendication précédente, dans lequel la tubulure de remplissage (4) ne comprend pas de ligne de ventilation en propre.

8. Réservoir (2) selon l'une quelconque des revendications précédentes, dans lequel l'organe de ventilation (6) est agencé pour obturer le réservoir lorsqu'un liquide atteint un niveau prédéterminé dans le réservoir.

9. Réservoir (2) selon l'une quelconque des précédentes revendications, dans lequel l'organe de ventilation (6) comprend un clapet à flotteur (12).

10. Réservoir (2) selon la précédente revendication, dans lequel le flotteur (110) comprend une bille.

11. Réservoir (2) selon la revendication 9, dans lequel le flotteur (210, 310) présente une face inférieure plane (28).

12. Réservoir (2) selon les revendications 9 ou 11, dans lequel le flotteur (310) présente une face supérieure tronconique (27).

13. Réservoir (2) selon l'une quelconque des précédentes revendications, dans lequel il s'agit d'un réservoir d'une solution d'urée.

## Patentansprüche

1. Tank (2) zur Bevorratung eines Ammoniak-Vorläufers für ein Fahrzeug umfassend ein Belüftungsorgan (6), das eine Wand des Tanks durchquert, **dadurch gekennzeichnet, dass** das Belüftungsorgan an einem Teil im Inneren des Tanks Stoßdämpfungsmittel (9) umfasst, die imstande sind, die Veränderung einer Form des Organs unter der Einwirkung einer Beanspruchung im Inneren des Tanks einer Stärke größer als ein vorab bestimmter Schwellwert zu gestatten und die Form wiederherzustellen, wenn die Beanspruchung verschwindet.

2. Tank (2) nach Anspruch 1, wobei das Belüftungsorgan derart ausgebildet ist, dass eine Länge des Organs sich unter der Einwirkung der Beanspruchung im Inneren des Tanks einer Stärke größer als ein vorab bestimmter Schwellwert verringert und dass die Länge zunimmt, wenn die Beanspruchung verschwindet.

3. Tank (2) nach einem der vorhergehenden Ansprüche, wobei das Belüftungsorgan (6) einen elastischen Abschnitt umfasst.

4. Tank (2) nach einem der vorhergehenden Ansprüche, wobei das Belüftungsorgan (6) einen gerillten Abschnitt (120) umfasst.

5. Tank (2) nach einem der vorhergehenden Ansprüche, wobei das Belüftungsorgan einen teleskopischen Abschnitt (220) umfasst.

6. Tank (2) nach einem der vorhergehenden Ansprüche, wobei der Tank einen Füllstutzen (4) umfasst und das Belüftungsorgan (6) so angeordnet ist, dass es mit dem Außenbereich des Tanks unabhängig von dem Füllstutzen kommuniziert.

7. Tank (2) nach dem vorhergehenden Anspruch, wobei der Füllstutzen (4) keine eigene Belüftungsleitung umfasst.

8. Tank (2) nach einem der vorhergehenden Ansprüche, wobei das Belüftungsorgan (6) angeordnet ist, um den Tank zu verschließen, wenn eine Flüssigkeit einen vorab bestimmten Füllstand in dem Tank erreicht.

9. Tank (2) nach einem der vorhergehenden Ansprüche, wobei das Belüftungsorgan (6) ein Schwimmerventil (12) umfasst.

10. Tank (2) nach dem vorhergehenden Anspruch, wobei der Schwimmer (110) eine Kugel umfasst.

11. Tank (2) nach Anspruch 9, wobei der Schwimmer (210, 310) eine ebene untere Fläche (28) umfasst.

12. Tank (2) nach Anspruch 9 oder 11, wobei der Schwimmer (310) eine kegelstumpfförmige obere Fläche (27) umfasst.

13. Tank (2) nach einem der vorhergehenden Ansprüche, wobei es sich um einen Tank mit einer Harnstofflösung handelt.

## Claims

1. A tank (2) for storing an ammonia precursor for a vehicle, comprising a ventilation component (6) which passes through a wall of the tank, **characterized in that** the ventilation component comprises, on a portion inside the tank, shock absorbing means (9) for allowing a shape of the component to be modified under the effect of a stress occurring inside the tank and having an intensity that is greater than a predetermined threshold and for allowing the shape to be restored when the stress ceases.

2. The tank (2) as claimed in claim 1, wherein the ventilation component is arranged such that a length of the component shortens under the effect of the stress occurring inside the tank and having an intensity that is greater than a predetermined threshold and such that the length increases when the stress ceases.

3. The tank (2) as claimed in any one of the preceding claims, wherein the ventilation component (6) comprises an elastic section.

4. The tank (2) as claimed in any one of the preceding claims, wherein the ventilation component (6) comprises a ringed section (120).

5. The tank (2) as claimed in any one of the preceding claims, wherein the ventilation component comprises a telescopic section (220).

6. The tank (2) as claimed in any one of the preceding claims, wherein the tank comprises a filling pipe (4) and the ventilation component (6) is arranged so as to communicate with the outside of the tank independently of the filling pipe.

7. The tank (2) as claimed in the preceding claim, wherein the filling pipe (4) does not comprise its own ventilation line.

8. The tank (2) as claimed in any one of the preceding claims, wherein the ventilation component (6) is arranged to seal the tank when a liquid reaches a predetermined level in the tank.

9. The tank (2) as claimed in any one of the preceding claims, wherein the ventilation component (6) comprises a float valve (12).

10. The tank (2) as claimed in the preceding claim, wherein the float (110) comprises a ball.

11. The tank (2) as claimed in claim 9, wherein the float (210, 310) has a flat lower surface (28).

12. The tank (2) as claimed in claim 9 or 11, wherein the float (310) has a frustoconical upper surface (27).

13. The tank (2) as claimed in any one of the preceding claims, wherein it is a tank for a urea solution.
